# EUROPÄISCHE PATENTSCHRIFT

(11) **EP 1 129 256 B1**
(45) Veröffentlichungstag und Bekanntmachung des Hinweises auf die Patenterteilung: **07.04.2004**
(21) Anmeldenummer: 99955885.1
(22) Anmeldetag: 26.10.1999
(51) Int. Cl.: E01D 19/04, F16C 29/02

(54) **BRÜCKENLAGER**
BRIDGE BEARING
APPUI POUR PONT

(30) Priorität: 05.11.1998 DE 19850946
(43) Veröffentlichungstag der Anmeldung: 05.09.2001
(73) Patentinhaber: INA-Schaeffler KG, 91074 Herzogenaurach (DE)
(72) Erfinder: TSCHETSCHORKE, Peter, D-33790 Halle (DE)
(86) Internationale Anmeldenummer: PCT/EP1999/008093
(87) Internationale Veröffentlichungsnummer: WO 2000/028145

(56) Entgegenhaltungen:
- DE-A- 1 459 949
- DE-A- 3 521 016
- DE-A- 3 603 352
- DE-C- 826 597

## Beschreibung

Die Erfindung betrifft ein Brückenlager, bei dem ein Unterbau und ein Überbau gleitend miteinander verbunden sind, wobei in einem gedachten dreidimensionalen Koordinatensystem der Überbau in wenigstens eine der horizontalen Richtungen X, Y verschiebbar und um die Senkrechte Z Kippbar ist.

### Hintergrund der Erfindung

Derartige Brückenlager, die ihrerseits auf Widerlagern oder Pfeilern ruhen, übertragen die Last aus dem Überbau auf den Unterbau, wobei der Überbau sich in Längs- und/oder Querrichtung bewegt. Zur Aufnahme von Verdrehwinkeln müssen derartige Lager jedoch auch mit einem Kippteil kombiniert werden.

Ein solch gattungsgemäßes Brückenlager ist aus dem Prospekt "Innovation in Stahl, Nr. AG 01 D-3000-12.97 der Firma Maurer Söhne bekannt. Es besteht aus einer Grundplatte, auf der eine in X-Richtung verschiebbare erste Zwischenplatte angeordnet ist, die wiederum eine zweite in Richtung Y verschiebbare Zwischenplatte trägt. Diese zweite Zwischenplatte weist eine gekrümmte Ausnehmung auf, in die ein dementsprechend angefertigter Kugelabschnitt eingelegt ist. Dieses gattungsgemäße Brückenlager wird dann von einer Deckplatte abgeschossen, die lineare Bewegungen in Richtung der beiden Achsen X und Y durchführen kann und die um die Achse Z schwenken kann.

Ein solches Brückenlager weist zum einen relativ große Abmessungen auf und ist zum anderen in seiner Einstellbarkeit hinsichtlich der Achsen X, Y und Z relativ ungenau. Ein weiterer Nachteil liegt in seiner ungenügenden Spielfreiheit.

### Zusammenfassung der Erfindung

Aufgabe der Erfindung ist es daher, unter Vermeidung der bisherigen Nachteile ein verbessertes Brückenlager zu entwickeln.

Erfindungsgemäß wird diese Aufgabe nach dem kennzeichnenden Teil von Anspruch 1 gelöst.

Der entscheidende Vorteil dieser Lagerung ist ihre klare Gliederung hinsichtlich der Funktion der drei Bewegungsachsen. Die Gleitbuchsen garantieren absolute Wartungsfreiheit auf niedrigstem Reibungsniveau. Belastungsangepaßte Lagerelemente wie Gleitlager und Gelenklager reduzieren das Gesamtgewicht der Lagerkonstruktion und benötigen wenig Bauraum. Die runden bzw. sphärischen Lagerelemente sind selbstzentrierend, was eine hohe Genauigkeit und eine gute Seitenstabilität ermöglicht. Die erfindungsgemäße Kombination aus Linear- und Gelenklager ermöglicht den Ausgleich aller Fluchtungsfehler aus Fertigungsungenauigkeiten, Fundamentsetzungen, gewollten und ungewollten Schiefstellungen und führt die thermisch und belastungsbedingten Längenänderungen bei gutem Dämpfungsvermögen.

Nach einem weiteren Merkmal der Erfindung gemäß Anspruch 2 ist vorgesehen, daß die Gleitbuchsen wartungsfreie zylindrische Gleitbuchsen auf PTFE-Basis sind.

Diese dem Fachmann bekannten Trockengleitlager bestehen aus einem zylindrischen Stahlstützkörper und der wartungsfreien Gleitschicht. Der Stahlkörper schützt vor Beschädigungen bei der Handhabung und beim Einbau. Die Gleitschicht besteht in der Regel aus einem 0,5 mm starken PTFE-Gewebe, ist in Kunstharz eingebettet und auf dem Stützkörper hochfest verankert. Das Fließverhalten der Gleitschicht ist in Verbindung mit dem Stützkörper auch bei höchster Belastung nahezu vemachlässigbar. Der Klebeverbund ist feuchtigkeitsstabil und quellfrei.

Aus Anspruch 3 geht hervor, daß die Y-Wellen in den Wellenhaltem mittels Haltekappen befestigt sind, die mit einer in den Stirnseiten der Y-Wellen angeordneten Befestigungsschraube von außen gegen den Wellenhalter gepreßt sind. Auf diese Weise ist eine einfache und sichere Fixierung der Y-Wellen gegeben.

Nach einem weiteren Merkmal der Erfindung gemäß Anspruch 4 ist vorgesehen, daß die X-Wellen an ihren gegenüberliegenden Enden je eine bogenförmige Ausbauchung aufweisen, in die die Y-Wellen mit einem Teil ihrer Umfangsfläche eintauchen. Dies hat den Vorteil, daß durch die Ausbauchung in eleganter Weise die Lagefixierung der X-Wellen durch die Y-Wellen gegeben ist.

Eine besonders vorteilhafte Form der erfindungsgemäßen Lagerung ist in Anspruch 5 beschrieben. Danach ist vorgesehen, daß die Grundplatte in ihrem Mittelteil einen in Richtung Deckplatte hervorstehenden Tragevorsprung aufweist, der im belasteten Zustand von der Unterseite des Schlittens berührt ist.

Dies hat den Vorteil, daß die Krafteinleitung auf das Lager nicht über die X-und Y-Wellen, sondern direkt auf die Grundplatte erfolgt, so daß eine ganz besonders stabile Ausführungsform der Lagerung gegeben ist.

Nach Anspruch 6 sollen die X- und/oder Y-Wellen in Richtung der Deckplatte eine Durchbiegung aufweisen. Dadurch wird bewirkt daß solch derart gestaltete Wellen eine gewisse Federwirkung besitzen, so daß die Lagerung vorgespannt ist.

Eine weitere, besonders vorteilhafte Ausführungsform der Erfindung ist in Anspruch 7 beschrieben. Danach soll der Schlitten in seinem Mittelteil eine mit einem Absatz versehene durchgehende Bohrung aufweisen, in die ein zweites Gelenklager eingesetzt ist, das über eine in die Deckplatte eingesetzte Sicherungsschraube gehalten ist, wobei im Bereich eines Zapfens des Schlittens ein Spalt zwischen der Sicherungsschraube und der Durchgangsbohrung gebildet ist. Dabei ist vorteilhaft, daß bei einem Wechsel der Kräfte in den negativen Bereich der Z-Achse die Deckplatte nicht abheben kann, d. h., es ist eine Abhebesicherung gebildet. In diesem Fall ist es nach Anspruch 8 erforderlich, daß beide Gelenklager ein gemeinsames Kugelzentrum aufweisen.

Wie aus Anspruch 9 hervorgeht, können die Gelenklager als wartungsfreie Axial-Gelenklager, Radial-Gelenklager oder Schräg-Gelenklager auf PTFE-Basis ausgebildet sein. Diese Gelenklager sind Baueinheiten, bestehend aus Wellen- und Gehäusescheiben und wartungsfreien Gleitschichten in den Gehäusescheiben. Die Wellenscheibe besitzt eine kugelige Außengleitbahn, während die Gehäusescheibe mit hohlkugeliger Innengleitbahn und mit eingeklebter Gleitschicht versehen ist. Derartige Gelenklager werden dann eingesetzt, wenn zum Beispiel hohe Lasten bei geringen Bewegungen übertragen werden.

In Anspruch 10 ist eine weitere vorteilhafte Ausführungsform eines X-, Z-Lagers beschrieben. Dieses zeichnet sich dadurch aus, daß eine Grundplatte zwei hervorstehende, in X-Richtung voneinander beabstandete Wellenhalter aufweist, in denen zwei voneinander beabstandete X-Wellen gehalten sind, auf denen mit dem Schlitten verbundene, in linearer Richtung verschiebbare Gleitbuchsen angeordnet sind und der Schlitten eine gekrümmte Wellenscheibe aufweist, die in einer zugehörigen Ausnehmung der Deckplatte aufgenommen ist, so daß diese in Z-Richtung kippbar ist.

Das zugehörige Gegenstück, nämlich ein Y-, Z-Lager geht aus Anspruch 11 hervor. Danach soll eine Grundplatte zwei hervorstehende, in Y-Richtung voneinander beabstandete Wellenhalter aufweisen, in denen zwei voneinander beabstandete Y-Wellen gehalten sind, auf denen mit dem Schlitten verbundene, in linearer Richtung verschiebbare Gleitbuchsen angeordnet sind und der schlitten eine gekrümmte Wellenscheibe aufweist, die in einer zugehörigen Ausnehmung der Deckplatte aufgenommen ist, so daß diese in Z-Richtung kippbar ist.

Die Erfindung wird an nachstehenden Ausführungsbeispielen näher erläutert.

### Kurze Beschreibung der Zeichnungen

Es zeigen:
- Figur 1: eine perspektivische Ansicht eines erfindungsgemäßen X-, Y-, Z-Lagers,
- Figur 2: eine Vorderansicht dieses Lagers,
- Figur 3: eine Seitenansicht dieses Lagers, teilweise geschnitten,
- Figur 4: eine Schnittdarstellung entlang der Linie A-A in Figur 3,
- Figur 5: eine Schittdarstellung entlang der Linie B-B in Figur 3,
- Figur 6: eine perspektivische Darstellung eines erfindungsgemäßen X-, Z-Lagers,
- Figur 7: eine perspektivische Darstellung eines erfindungsgemäßen Y-, Z-Lagers,
- Fig. 8 - 12: eine perspektivische Darstellung eines erfindungsgemäßen X-, Y-, Z-Lagers in fortschreitenden Aufbaustufen.

### Ausführliche Beschreibung der Zeichnungen

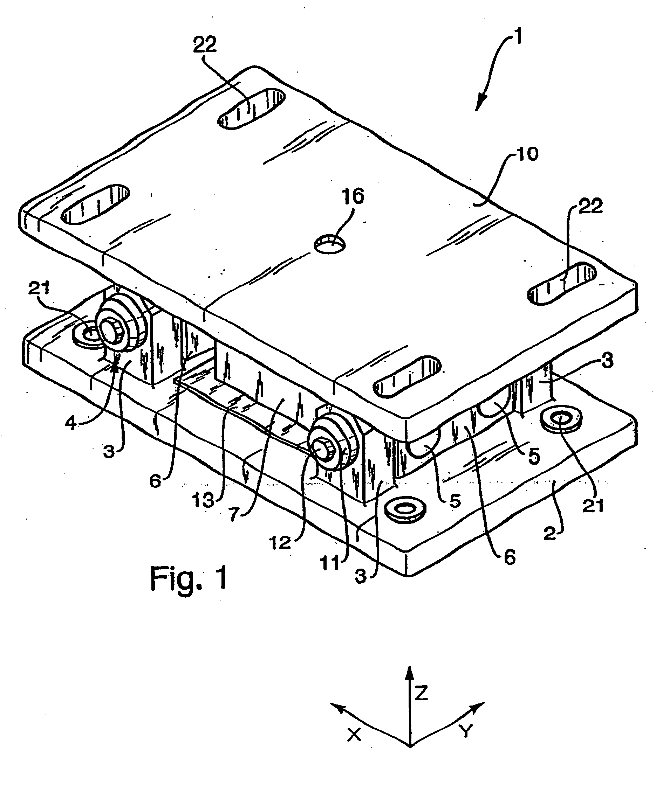

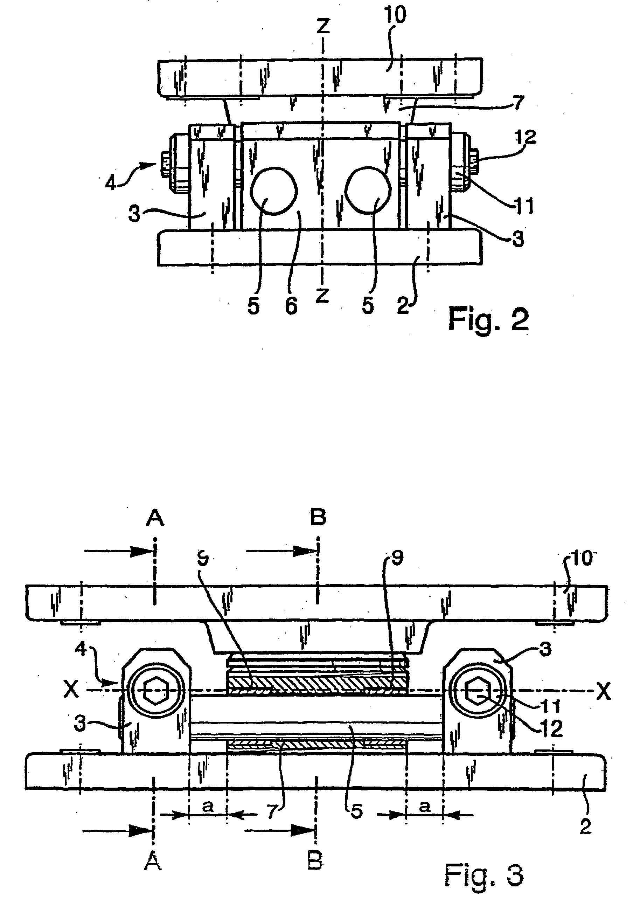

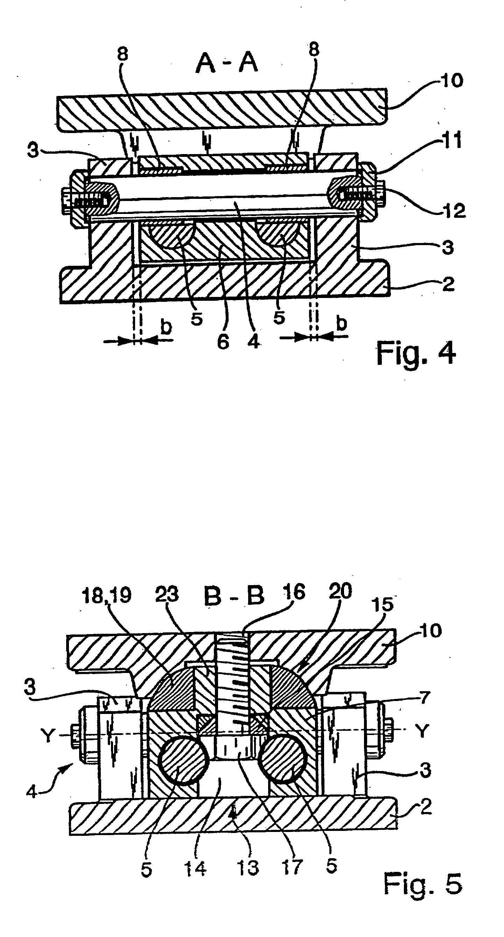

Das in den Figuren 1 bis 5 gezeigte und mit 1 bezeichnete erfindungsgemäße X-, Y-, Z-Lager besteht aus einer mit Befestigungsbohrungen 21 versehenen Grundplatte 2, auf der vier in X- und in Y-Richtung voneinander beabstandete, hervorstehende Wellenhalter 3 angeordnet sind. in diesen paarweisen Wellenhaltem 3 sind zwei Y-Wellen 4 untergebracht, deren Fixierung durch Haltekappen 11 erfolgt, die Ober in den Y-Wellen 4 eingedrehte Befestigungsschrauben 12 von außen gegen die Wellenhalter 3 gepreßt werden. In Y-Richtung ist zwischen je zwei Wellenhaltern 3 je ein weiterer Wellenhalter 6 angeordnet, wobei beide Wellenhalter 6 durch zwei voneinander beabstandete X-Wellen 5 miteinander verbunden sind. Die Kreuzung beider Wellen 4, 5 wird durch je eine gegenüberliegende Ausbauchung der X-Welle 5 ermöglicht. Auf den X-Wellen 5 ist über Gleitbuchsen 9 ein Schlitten 7 geführt, der mit einer mit Langlochbohrungen 22 versehenen Deckplatte 10 verbunden ist. Dieser Schlitten 7 ist in X-Richtung um den Betrag a von einer Neutralstellung aus sowohl nach rechts als auch nach links verschiebbar, wie Figur 3 zeigt. Die X-Wellen 5 wiederum sind in Y-Richtung, wie Figur 4 zeigt, um den Betrag b von einer Neutralstellung aus ebenfalls sowohl nach rechts als auch nach links verschiebbar. Die verschiebung in Y-Richtung erfolgt dabei mittels der Wellenhalter 6 über von deren Gleitbuchsen 8.

Wie aus Figur 5 entnehmbar, ist der Schlitten 7 in seinem Mittelteil mit einer Durchgangsbohrung 14 ausgestattet. An deren nicht bezeichneten Absatz liegt ein Gelenklager 15 an, das mit einer in die Durchgangsbohrung 16 der Grundplatte 2 eingeschraubten Sicherungsschraube 17 gehalten ist. Einen Zapfen 23 des Schlittens 7 umgibt eine Wellenscheibe 19 eines Gelenklagers 18, wobei die Wellenscheibe 18 von einer Ausnehmung 20 in der Deckplatte 10 aufgenommen ist. Auf diese Weise ist eine Abhebesicherung gebildet, die ein Abheben der Deckplatte 10 vom Schlitten 7 verhindert. Ein Verschwenken der Deckplatte 10 bei vorhandener Abhebesicherung ist nur soweit möglich, wie es der Luftspalt zwischen dem Schaft der Sicherungsschraube 17 und der Durchgangsbohrung 14 im Bereich des Zapfens 23 des Schlittens 7 zuläßt.

Wie Figur 1 und Figur 5 weiter zeigen, ist die Grundplatte 2 mit einem in Richtung Deckplatte 10 weisenden Tragevorsprung 13 versehen, so daß zwischen Schlitten 7 und Tragevorsprung 13 kein Spalt entsteht, d. h. die Krafteinleitung direkt auf die Grundplatte 2 erfolgt. In diesem Fall ist es zweckmäßig, die Unterseite des Schlittens 7 mit einer entsprechenden Gleitschicht zu versehen. Fehlt der Tragevorsprung 13, so ist ein Schlitz zwischen Grundplatte 2 und Schlitten 7 gebildet, so daß die Krafteinleitung auf die Grundplatte 2 über die X-Wellen 5 und die Y-Wellen 4 erfolgt.

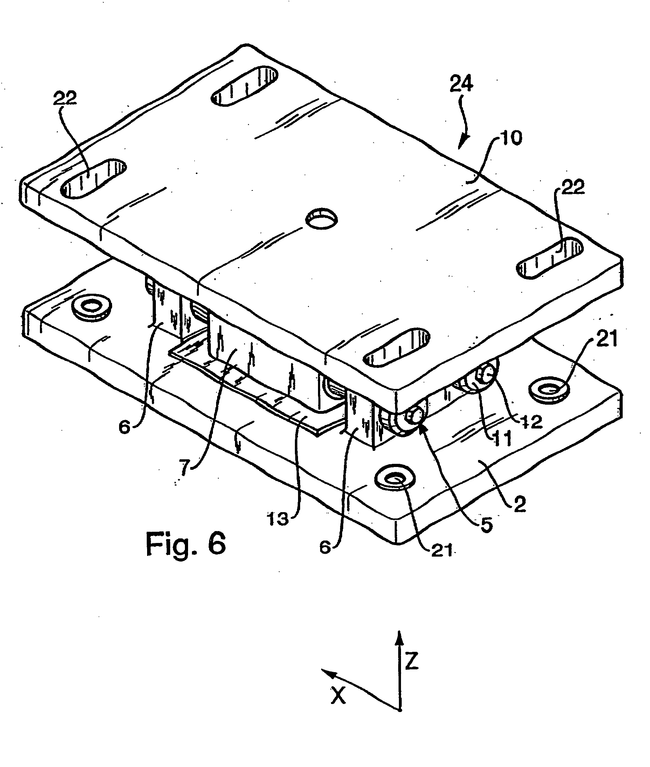

Das in Figur 6 in perspektivischer Darstellung gezeigte X-, Z-Lager ist, wie schon durch die Bezeichnung ausgedrückt, linear in Richtung der X-Achse verschiebbar und um die Z-Achse kippbar. Demzufolge sind im Gegensatz zum vorstehend beschriebenen X-, Y-, Z-Lager die Y-Wellen 4 entbehrlich. Ansonsten ist der Lageraufbau prinzipiell der gleiche. Dieses Lager weist darüber hinaus auch keine Haftesicherung auf, so daß auf das Gelenklager 15 verzichtet werden kann.

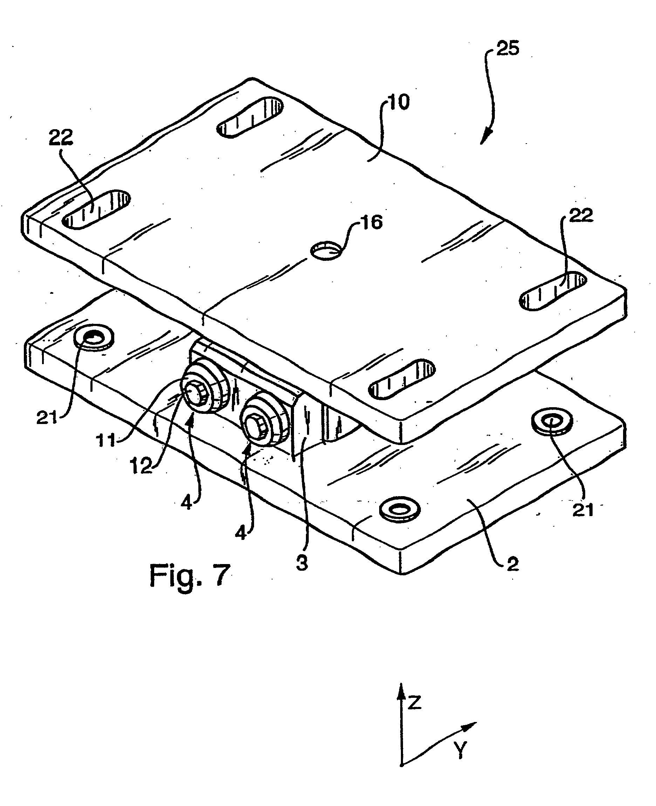

In Figur 7 ist ein Y-, Z-Lager ebenfalls in perspektivischer Form dargestellt. Der Aufbau ist analog dem in den Figuren 1 bis 5 beschriebenen X-, Y-, Z-Lager, wobei aufgrund der zwei Freiheitsgrade auf die X-Wellen 5 verzichtet wird.

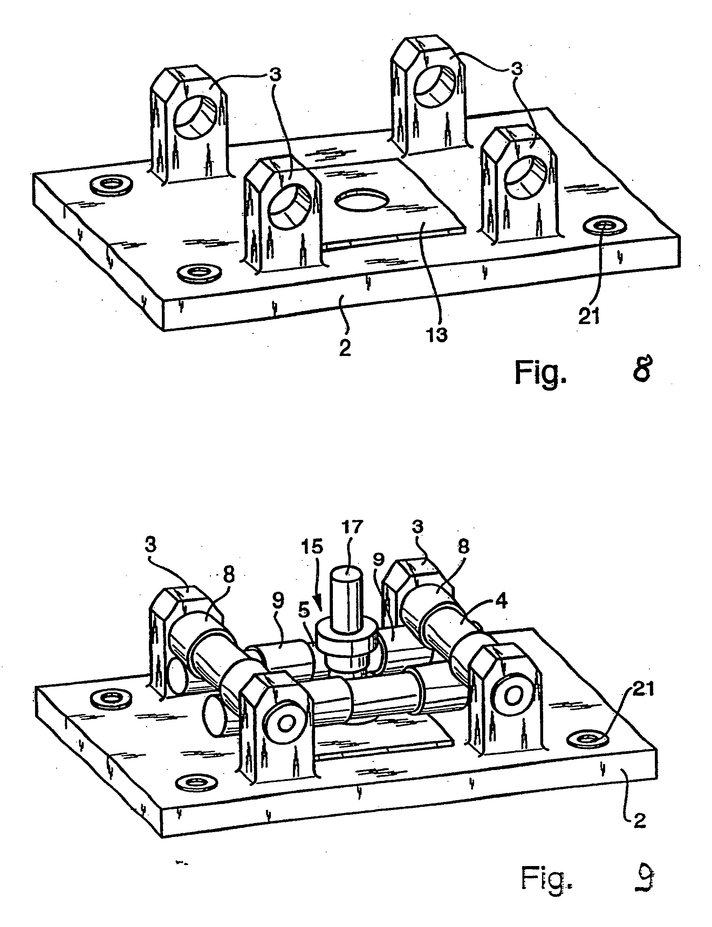

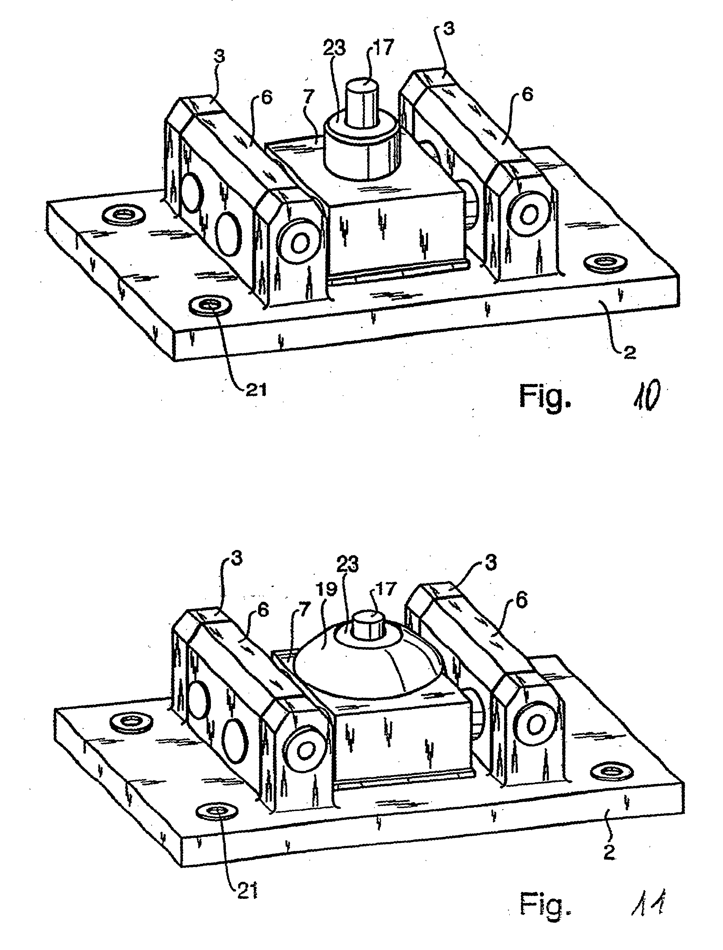

In den Figuren 8 bis 12 ist ein X-, Y-, Z-Lager in perspektivischer Darstellung in fortschreitendem Aufbau gezeigt. Wie aus Figur 8 erkennbar, ist die Grundplatte 2 mit Befestigungsbohrungen 21 versehen, die zur Fixierung auf einer Anschlußkonstruktion dienen. Aus der Grundplatte 2 ragen mit Durchgangsbohrungen versehene Wellenhalter 3 hervor. Im Mittelteil der Grundplatte 2 ist der Tragevorsprung 13 sichtbar. Wie Figur 9 erkennen läßt, sind in den Aufnahmebohrungen der Wellenhalter 3 Y-Wellen 4 aufgenommen, auf denen je zwei Gleitbuchsen 8 angeordnet sind. Unter den Y-Wellen 4 liegen zwei X-Wellen 5, die im Bereich der Gleitbuchsen 8 mit einer bogenförmigen Ausnehmung versehen sind, so daß die Y-Wellen 4 bzw. die Gleitbuchsen 8 in diese Ausnehmung teilweise eintauchen. Auf diese Weise ist ein Verschieben der X-Wellen 5 verhindert. Zwischen den X-Wellen 5 liegend ist das Gelenklager 15 mit der Sicherungsschraube 17 angedeutet.

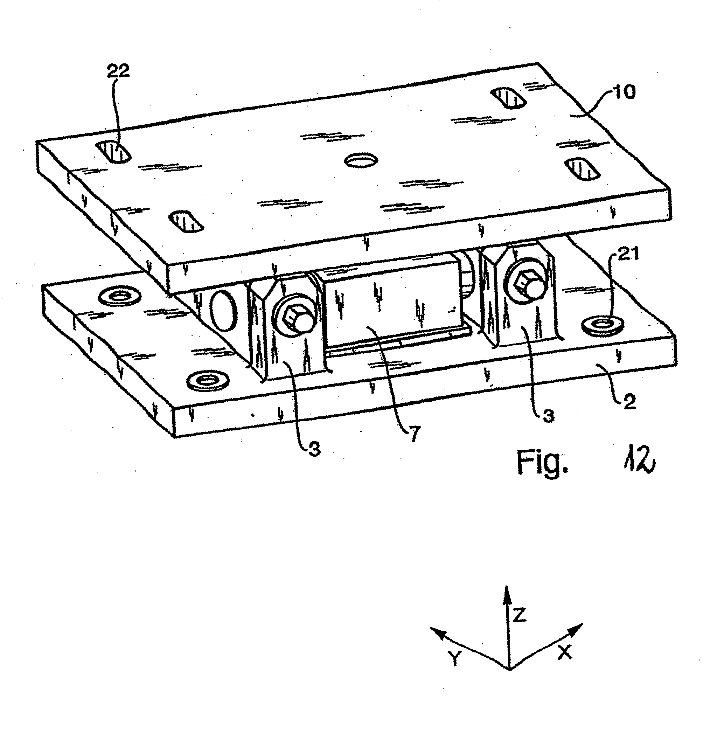

Gemäß Figur 10 folgt eine Komplettierung des X-, Y-, Z-Lagers derart, daß die die X-Wellen 5 tragenden Wellenhalter 6 eingezeichnet sind. Auf diesen X-Wellen 5 ist der Schlitten 7 verschiebbar gezeigt, der in seinem Inneren das nicht sichtbare Gelenklager 15 trägt, wobei der Schlitten 7 mit dem Zapfen 23 versehen ist. Zu erkennen ist auch die Sicherungsschraube 17, die in die hier nicht gezeichnete Deckplatte 10 eingeschraubt wird. Wie aus Figur 11 erkennbar, ist das Lager nun derart komplettiert, daß um den Zapfen 23 des Schlittens 7 eine Wellenscheibe 19 des Gelenklagers gelegt ist. In Figur 12 schließlich ist das mit der Deckplatte 10 komplettierte Lager dargestellt. Diese weist in ihrer Mitte die Durchgangsbohrung 16 auf, in die die Sicherungsschraube 17 eingeschraubt ist.

### Bezugszeichen

- 1: X-, Y-, Z-Lager
- 2: Grundplatte
- 3: Wellenhalter für Y-Welle
- 4: Y-Welle
- 5: X-Welle
- 6: Wellenhalter für X-Welle
- 7: Schlitten .
- 8: Gleitbuchse auf der Y-Welle
- 9: Gleitbuchse auf der X-Welle
- 10: Deckplatte
- 11: Haltekappe
- 12: Befestigungsschraube
- 13: Tragevorsprung
- 14: Durchgangsbohrung
- 15: zweites Gelenklager
- 16: Durchgangsbohrung
- 17: Sicherungsschraube
- 18: erstes Gelenklager
- 19: Wellenscheibe
- 20: Ausnehmung
- 21: Befestigungsbohrung
- 22: Langlochbohrung
- 23: Zapfen
- 24: X-, Z-Lager
- 25: Y-, Z-Lager
- 27: Vorsprung
- 28: Gegenvorsprung
- a: Verschiebebetrag in X-Richtung
- b: Verschiebebetrag in Y-Richtung

## Patentansprüche

1. Brückenlager, bei dem ein Unterbau und ein Überbau gleitend miteinander verbunden sind, wobei in einem gedachten dreidimensionalen Koordinatensystem der Überbau in wenigstens eine der horizontalen Richtungen X,Y verschiebbar und um die Senkrechte Z kippbar ist mit einer am Unterbau anordenbaren Grundplatte und einer am Überbau anordenbaren Deckplatte **dadurch gekennzeichnet,**
**daß** es als X-, Y-, Z-Lager ausgebildet ist, wobei die Grundplatte (2) vier hervorstehende, in X- und in Y-Richtung voneinander beabstandete Wellenhalter (3) aufweist, in denen zwei Y-Wellen (4), die zur Y-Richtung parallel sind, gehalten sind, wobei auf den Y-Wellen (4) je ein weiterer verschiebbarer Wellenhalter (6) angeordnet ist, die durch zwei X-Wellen (5), die zur X-Richtung parallel sind, miteinander verbunden sind, so daß ein auf den X- und Y-Wellen (5, 6) über Gleitbuchsen (9, 8) geführter Schlitten (7) in beide Richtungen linear verfahrbar ist und daß der Schritten (7) eine gekrümmte Wellenscheibe (19) aufweist, die in einer zugehörigen Ausnehmung (20) der Deckplatte (10) aufgenommen ist, so daß diese über ein erstes Gelenklager (18) um die Senkrechte Z Kippbar ist.

2. Brückenlager nach Anspruch 1, **dadurch gekennzeichnet, daß** die Gleitbuchsen (8, 9) wartungsfreie zylindrische Gleitbuchsen auf PTFE-Basis sind.

3. Brückenlager nach Anspruch 1, **dadurch gekennzeichnet, daß** die Y-Wellen (4) in den Wellenhaltern (3) mittels Haltekappen (11) befestigt sind, die mit einer in den Stirnseiten der Y-Wellen (4) angeordneten Befestigungsschraube (12) von außen gegen die Wellenhalter (3) gepreßt sind.

4. Brückenlager nach Anspruch 1, **dadurch gekennzeichnet, daß** die X-Wellen (5) an ihren gegenüberliegenden Enden je eine bogenförmige Ausbauchung aufweisen, in die die Y-Wellen (4) mit einem Teil ihrer Umfangsfläche eintauchen.

5. Brückenlager nach Anspruch 1, **dadurch gekennzeichnet, daß** die Grundplatte (2) in ihrem Mittelteil einen in Richtung Deckplatte (10) hervorstehenden Tragevorsprung (13) aufweist, der im belasteten Zustand von der Unterseite des Schlittens (7) berührt ist.

6. Brückenlager nach Anspruch 1, **dadurch gekennzeichnet, daß** die X- und/oder die Y-Wellen (5, 4) in Richtung Deckplatte (10) eine Durchbiegung aufweisen.

7. Brückenlager nach Anspruch 1, **dadurch gekennzeichnet, daß** der Schlitten (7) in seinem Mittelteil eine mit einem Absatz versehene durchgehende Bohrung (14) aufweist, in die ein zweites Gelenklager (15) eingesetzt ist, das über eine in die Deckplatte (10) eingesetzte Sicherungsschraube (17) gehalten ist, wobei im Bereich eines Zapfens (23) des Schlittens (7) ein Spalt zwischen der Sicherungsschraube (17) und der Durchgangsbohrung (14) gebildet ist.

8. Brückenlager nach Anspruch 7, **dadurch gekennzeichnet, daß** die ersten und zweiten Gelenklager (18, 15) ein gemeinsames Kugelzentrum aufweisen.

9. Brückenlager nach Anspruch 1 und 7 **dadurch gekennzeichnet, daß** die ersten und zweiten Gelenklager (18, 15) als wartungsfreies Axial-Gelenklager, Radial-Gelenklager oder Schräg-Gelenklager auf PTFE-Basis ausgebildet sind.

10. Brückenlager, bei dem ein Unterbau und ein Überbau gleitend miteinander verbunden sind, wobei in einem gedachten dreidimensionalen Koordinatensystem der Überbau in wenigstens eine der horizontalen Richtungen X,Y verschiebbar und um die Senkrechte Z kippbar ist, mit einer am Unterbau anordenbaren Grundplatte und einer am Überbau anordenbaren Deckplatte, **dadurch gekennzeichnet, daß** es als X-, Z-Lager ausgebildet ist, wobei die Grundplatte (2) zwei hervorstehende, in X-Richtung voneinander beabstandete Wellenhalter (6) aufweist, in denen zwei voneinander beabstandete X-Wellen (5), die zur X-Richtung parallel sind, gehalten sind, auf denen mit dem Schlitten (7) verbundene, in linearer Richtung yerschtebbare Gleitbuchsen (9) angeordnet sind und der Schlitten (7) eine gekrümmte Wellenscheibe (19) aufweist, die in einer zugehörigen Ausnehmung (20) der Deckplatte (10) aufgenommen ist, so daß diese in Z-Richtung kippbar ist.

11. Brückenlager, bei dem ein Unterbau und ein Überbau gleitend miteinander verbunden sind, wobei in einem gedachten dreidimensionalen Koordinatensystem der Überbau in wenigstens eine der horizontalen Richtungen X,Y verschiebbar und um die Senkrechte Z kippbar ist, mit einer am Unterbau anordenbaren Grundplatte und einer am Überbau anordenbaren Deckplatte, **dadurch gekennzeichnet, daß** es als Y-, Z-Lager ausgebildet ist, wobei die Grundplatte (2) zwei hervorstehende, in Y-Richtung voneinander beabstandete Wellenhalter (3) aufweist, in denen zwei voneinander beabstandete Y-Wellen (4), die zur Y-Richtung parallel sind, gehalten sind, auf denen mit dem Schlitten (7) verbundene, in linearer Richtung verschiebbare Gleitbuchsen (8) angeordnet sind und der Schlitten (7) eine gekrümmte Wellenscheibe (19) aufweist, die in einer zugehörigen Ausnehmung (20) der Deckplatte (10) aufgenommen ist, so daß diese in Z-Richtung kippbar ist

## Claims

1. Bridge bearing with which a substructure and a superstructure are slideably interconnected, where, in an imaginary three-dimensional system of coordinates, the superstructure can be displaced in at least one of the horizontal directions X, Y and can be tilted about the vertical Z, comprising a baseplate which can be arranged on the substructure and a cover plate which can be arranged on the superstructure, **characterized in that** it is designed as an X-, Y-, Z-bearing, where the baseplate (2) has four protruding shaft mounts (3) which are spaced apart from one another in the X-direction and in the Y-direction and in which two Y-shafts (4) which are parallel to the Y-direction are held, where a further displaceable shaft mount (6) is arranged on each of the Y-shafts (4), the shaft mounts (6) being interconnected by means of two X-shafts (5) which are parallel to the X-direction, such that a carriage (7) guided on the X- and Y-shafts (5, 6) via slide bushes (9, 8) is able to move linearly in both directions, and **in that** the carriage (7) has a curved shaft plate (19) which is housed in an associated cavity (20) in the cover plate (10), such that said cover plate is able to tilt about the vertical Z via a first pivot bearing (18).

2. Bridge bearing according to Claim 1, **characterized in that** the slide bushes (8, 9) are maintenance-free cylindrical slide bushes based on PTFE.

3. Bridge bearing according to Claim 1, **characterized in that** the Y-shafts (4) are fastened in the shaft mounts (3) by means of retaining caps (11) which are pressed against the shaft mounts (3) from outside by means of a fastening screw (12) arranged in the end faces of the Y-shafts (4).

4. Bridge bearing according to Claim 1, **characterized in that** the X-shafts (5) have at each of their opposite ends an arcuate bulge into which part of the circumferential surface of the Y-shafts (4) penetrates.

5. Bridge bearing according to Claim 1, **characterized in that** the baseplate (2) has in its central part a projecting support (13) which protrudes in the direction of the cover plate (10) and is contacted in the loaded state by the underside of the carriage (7).

6. Bridge bearing according to Claim 1, **characterized in that** the X- and/or the Y-shafts (5, 4) have a deflection in the direction of the cover plate (10).

7. Bridge bearing according to Claim 1, **characterized in that** the carriage (7) has in its central part a through hole (14) provided with a shoulder and into which is fitted a second pivot bearing (15) which is retained via a securing screw (17) fitted into the cover plate (10), a gap between the securing screw (17) and the through hole (14) being formed in the region of a journal (23) of the carriage (7).

8. Bridge bearing according to Claim 7, **characterized in that** the first and second pivot bearings (18, 15) have a common sphere centre.

9. Bridge bearing according to Claims 1 and 7, **characterized in that** the first and second pivot bearings (18, 15) are designed as maintenance-free axial pivot bearings, radial pivot bearings or oblique pivot bearings based on PTFE.

10. Bridge bearing with which a substructure and a superstructure are slideably interconnected, where, in an imaginary three-dimensional system of coordinates, the superstructure can be displaced in at least one of the horizontal directions X, Y and can be tilted about the vertical Z, comprising a baseplate which can be arranged on the substructure and a cover plate which can be arranged on the superstructure, **characterized in that** it is designed as an X-, Z-bearing, where the baseplate (2) has two protruding shaft mounts (6) which are spaced apart from one another in the X-direction and in which two spaced-apart X-shafts (5) which are parallel to the X-direction are held, on which shafts are arranged slide bushes (9) which are connected to the carriage (7) and can be displaced in the linear direction, and the carriage (7) has a curved shaft plate (19) which is housed in an associated cavity (20) in the cover plate (10), such that said cover plate is able to tilt in the Z-direction.

11. Bridge bearing with which a substructure and a superstructure are slideably interconnected, where, in an imaginary three-dimensional system of coordinates, the superstructure can be displaced in at least one of the horizontal directions X, Y and can be tilted about the vertical Z, comprising a baseplate which can be arranged on the substructure and a cover plate which can be arranged on the superstructure, **characterized in that** it is designed as a Y-, Z-bearing, where the baseplate (2) has two protruding shaft mounts (3) which are spaced apart from one another in the Y direction and in which two spaced-apart Y-shafts (4) which are parallel to the Y-direction are held, on which shafts are arranged slide bushes (8) which are connected to the carriage (7) and can be displaced in the linear direction, and the carriage (7) has a curved shaft plate (19) which is housed in an associated cavity (20) in the cover plate (10), such that said cover plate is able to tilt in the Z-direction.

## Revendications

1. Appui pour pont avec lequel une infrastructure et une superstructure sont reliées ensemble de manière coulissante, où dans un système de coordonnées imaginaire conçu avec trois dimensions, la superstructure peut se déplacer dans au moins une des directions horizontales X, Y, et basculer autour de la perpendiculaire Z, avec une plaque de base pouvant être aménagée sur l'infrastructure et une plaque de couverture pouvant être aménagée sur la superstructure, **caractérisé en ce qu'**il est réalisé en tant qu'appui X, Y, Z, où la plaque de base (2) présente quatre supports d'arbre (3) qui dépassent et espacés les uns par rapport aux autres en direction X et Y, dans lesquels respectivement deux arbres Y (4) parallèles à la direction Y sont maintenus, moyennant quoi respectivement un autre support d'arbre (6) coulissant est disposé sur les arbres Y (4), lesquels supports d'arbre sont reliés ensemble par deux arbres X (5) qui sont parallèles à la direction X, de sorte qu'un chariot (7) guidé via des douilles de glissement (8, 9) sur les arbres X et Y (5, 6) peut se déplacer linéairement dans les deux directions, et de sorte que le chariot (7) présente un disque d'arbre (19) curviligne, lequel est réceptionné dans un évidement (20) associé de la plaque de couverture (10), de sorte que celle-ci peut basculer autour de la perpendiculaire Z via un premier appui mobile libre (18).

2. Appui pour pont selon la revendication 1, **caractérisé en ce que** les douilles de glissement (8, 9) sont des douilles de glissement cylindriques, sans entretien, à base de PTFE.

3. Appui pour pont selon la revendication 1, **caractérisé en ce que** les arbres Y (4) dans les supports d'arbre (3) sont fixés à l'aide de coiffes de retenue (11), lesquelles sont pressées de l'extérieur contre les supports d'arbre (3) par une vis de fixation (12) disposée dans les côtés frontaux des arbres Y (4).

4. Appui pour pont selon la revendication 1, **caractérisé en ce que** les arbres X (5) présentent sur leurs extrémités opposées respectivement un évasement en forme d'arche, dans lesquels plongent les arbres Y (4) avec une partie de leur surface circonférentielle.

5. Appui pour pont selon la revendication 1, **caractérisé en ce que** la plaque de base (2) présente dans sa partie médiane une saillie de support (13) qui dépasse en direction de la plaque de couverture (10), laquelle entre en contact avec le dessous du chariot (7) à l'état sous contrainte.

6. Appui pour pont selon la revendication 1, **caractérisé en ce que** les arbres X et/ou Y (4, 5) présentent une courbure en direction de la plaque de couverture (10).

7. Appui pour pont selon la revendication 1, **caractérisé en ce que** le chariot (7) présente dans sa partie médiane une forure de bout en bout (14) pourvue d'un palier dans laquelle est insérée un deuxième appui mobile libre (15) qui est maintenu par une vis de blocage (17) inséré dans la plaque de couverture (10), moyennant quoi dans la zone d'un tourillon (23) du chariot (7), une fente est formée entre la vis de blocage (17) et la forure de passage (14).

8. Appui pour pont selon la revendication 7, **caractérisé en ce que** le premier et deuxième appui mobile libre (18, 15) présentent un centre de bille commun.

9. Appui pour pont selon les revendications 1 et 7, **caractérisé en ce que** le premier et deuxième appui mobile libre (18, 15) sont réalisés en tant qu'appuis mobiles axiaux, appuis mobiles radiaux ou appuis mobiles en biais, sans entretien, à base de PTFE.

10. Appui pour pont avec lequel une infrastructure et une superstructure sont reliées ensemble de manière coulissante, où dans un système de coordonnées imaginaire conçu avec trois dimensions, la superstructure peut se déplacer dans au moins une des directions horizontales X, Y, et basculer autour de la perpendiculaire Z, avec une plaque de base pouvant être aménagée sur l'infrastructure et une plaque de couverture pouvant être aménagée sur la superstructure, **caractérisé en ce qu'**il est réalisé en tant qu'appui X, Z, où la plaque de base (2) présente deux supports d'arbre (6) qui dépassent et espacés l'un par rapport à l'autre en direction X, dans lesquels sont maintenus deux arbres X (4) espacés l'un par rapport à l'autre qui sont parallèles à la direction X, sur lesquels sont disposées des douilles de glissement (8) coulissantes en direction linéaire et reliées avec le chariot (7), et **en ce que** le chariot (7) présente un disque d'arbre (19) curviligne réceptionné dans un évidement (20) associé de la plaque de couverture (10), de sorte que celle-ci peut basculer en direction Z.

11. Appui pour pont avec lequel une infrastructure et une superstructure sont reliées ensemble de manière coulissante, où dans un système de coordonnées imaginaire conçu avec trois dimensions, la superstructure peut se déplacer dans au moins une des directions horizontales X, Y, et basculer autour de la perpendiculaire Z, avec une plaque de base pouvant être aménagée sur l'infrastructure et une plaque de couverture pouvant être aménagée sur la superstructure, **caractérisé en ce qu'**il est réalisé en tant qu'appui Y, Z, où la plaque de base (2) présente deux supports d'arbre (3) qui dépassent et espacés l'un par rapport à l'autre en direction Y, dans lesquels sont maintenus deux arbres Y (4) espacés l'un par rapport à l'autre qui sont parallèles à la direction Y, sur lesquels sont disposées des douilles de glissement (8) coulissantes en direction linéaire et reliées avec le chariot (7), et **en ce que** le chariot (7) présente un disque d'arbre (19) curviligne réceptionné dans un évidement (20) associé de la plaque de couverture (10), de sorte que celle-ci peut basculer en direction Z.
